# EUROPEAN PATENT APPLICATION

(11) **EP 4 787 625 A1**
(43) Date of publication of application: **05.08.2026**
(21) Application number: 26155212.9
(22) Date of filing: 30.01.2026
(51) Int. Cl.: H01R 4/30, H01R 4/70, H01R 11/28, H01M 50/502, H01M 50/591, H01R 13/44, B60R 16/02, B60R 16/033

(54) **ELECTRICALLY INSULATING COVER, TOUCH PROTECTED INTERFACE, HIGH VOLTAGE MODULE CONNECTOR AND KIT**

(30) Priority: 04.02.2025 IN 202541009098
(71) Applicant: TE Connectivity Solutions GmbH, 8200 Schaffhausen (CH)
(72) Inventor: Eheim, Manuel, 8200 Schaffhausen (CH); Ziereisen, Elina, 8200 Schaffhausen (CH); Fissore, Luciano, 8200 Schaffhausen (CH); Kaehny, Frank, 8200 Schaffhausen (CH); Buchholz, Ron, 8200 Schaffhausen (CH); Hoffmann, Bjoern, 8200 Schaffhausen (CH); Distler, Patrick, 8200 Schaffhausen (CH); Wolf, Marcus, 8200 Schaffhausen (CH); Schaefer, Maik, 8200 Schaffhausen (CH); Toth, Gerzson, 8200 Schaffhausen (CH); Nirmale, Mayur, 560066 Bangalore, Karnataka (IN)
(74) Representative: Grünecker Patent- und Rechtsanwälte PartG mbB

(57) **Abstract**

An electrically insulating cover (1) for a connection part (16) of an electrical module connector (2) comprises a housing section (40) that forms a protective collar (42) for the connection part (16), a contacting chamber (44) at least sectionally surrounded by the protective collar (42), the contacting chamber (44) being configured to at least partially accommodate the connection part (16), and a fastening section (64) for fastening the electrically insulating cover (1) to the connection part (16), wherein the fastening section (64) extends at least partially within the contacting chamber (44), and wherein the fastening section (64) comprises at least one retaining element (66), which is arched into the contacting chamber (44). Advantageously, the at least one retaining element (66) arched into the contacting chamber (44) can directly and immediately form a form-fitting and/or force-fitting connection with the connection part (16) located in the contacting chamber (44). Furthermore, the present invention relates to a touch protected interface (4) with such an electrically insulating cover (1) and an electrically conductive connection part (16). Moreover, the present invention relates to a module connector (2) with a touch protected interface (4) and a complementary mating part (8). Finally, the present invention relates to a kit (6) comprising an electrically insulating cover (1) and two flat conductors (22', 22") of different thicknesses (128).

## Description

### Technical Field to which the Invention Relates

The invention relates to an electrically insulating cover for a connection part of an electrical module connector. Furthermore, the present invention relates to a touch protected interface with such an electrically insulating cover and an electrically conductive connection part. Moreover, the present invention relates to a module connector with a touch protected interface and a complementary mating part. Finally, the present invention relates to a (construction) kit comprising an electrically insulating cover and two flat conductors of different thicknesses.

### Background Art

Module connectors are used in battery systems and other kinds of systems in the field of energy engineering to interconnect different electrical modules. Herein, these modules are connected to each other using conductors and connection parts. In particular, these modules can be battery modules, control units, current transformers or busbars. Given the high voltages and/or currents that these modules often work with, they can become dangerous for a user, such as a mechanic in a workshop.

Particularly at locations where the user is in close physical proximity, a touch protection against accidental contact is provided to cover the respective connection parts of the module connector. Herein, a reliable attachment of the touch protection is essential for the electrical safety of the module connector.

Depending on the application, the same connection parts can be used with differently dimensioned conductors, for example to provide a sufficient conductor cross-section. This means that the geometry around the connection parts changes from application to application.

With existing solutions, the touch protection has to be selected from a range of different variants to suit these geometric conditions. If a large number of applications is to be covered with the different variants of the touch protection, this often results in over-fragmentation, which can only be realized at great expense and with a corresponding number of different manufacturing molds. Over-fragmentation also increases the cost of storage and transportation.

### Technical Object to be Achieved

The object of the invention is therefore to provide means for increasing the electrical safety of module connectors, while reducing manufacturing and handling costs.

This object is solved by an electrically insulating cover for a connection part of an electrical module connector, wherein the electrically insulating cover comprises a housing section which forms a protective collar for the connection part, a contacting chamber which is at least sectionally surrounded by the protective collar and which is configured to receive the connection part at least partially therein, and a fastening section for fastening the electrically insulating cover to the connection part, wherein the fastening section extends at least partially within the contacting chamber, and wherein the fastening section comprises a retaining element which is arched into the contacting chamber.

Herein, the retaining element is arched into the contacting chamber in that it extends into the contacting chamber in an arched, bent, curved, arcuate or inclined shape. In particular, the retaining element may extend from an edge region of the contacting chamber towards an inner region of the contacting chamber. In other words, the retaining element extends increasingly deeper into the contacting chamber along its arched, bent, curved, arcuate or inclined shape.

A connection part located in the contacting chamber is at least sectionally surrounded by the protective collar of the electrically insulating cover along a circumferential direction, so that it cannot be touched by fingers, hands or other body parts of the user. The solution according to the invention is advantageous since the retaining element arched into the contacting chamber can directly and immediately form a form-fitting and/or force-fitting connection with the connection part located in the contacting chamber.

In contrast to a conventional touch protection, which is usually attached to the conductor, the electrically insulating cover of the present invention can be used regardless of the dimensions of the conductor. The electrically insulating cover thus exhibits a broad applicability. Consequently, there is no need for different touch protection variants that have to be manufactured in different manufacturing molds. This not only saves manufacturing costs, but also lowers transportation and storage costs.

The object defined at the outset is also solved by a touch protected interface for a module connector, wherein the touch protected interface comprises an electrically insulating cover according to the invention and an electrically conductive connection part of the module connector, and wherein the connection part comprises a recess in which the fastening section of the electrically insulating cover is receivable in a form-fitting manner. That is, the fastening section can be received in the recess which results in the above-mentioned form-fit connection between the electrically insulating cover and the connection part. In particular, the retaining element can be positively received in the recess. Advantageously, the electrically insulating cover can thus be fastened directly and immediately to the connection part in order to ensure electrical insulation there.

A module connector with such a touch protected interface and a mating part that is complementary to the touch protected interface also solves the object defined at the outset. In this case, the mating part is connectable to the touch protected interface along a plug-in direction. That means the mating part and the touch protected interface can be connected to each other along the plug-in direction. Herein, the mating part comprises a protective housing, which secures the fastening section of the electrically insulating cover when the touch protected interface is connected to the mating part.

In other words, the protective housing blocks or locks the fastening section as long as the touch protected interface and its mating part are in a connected state. In particular, this prevents unintentional removal of the electrically insulating cover. For example, due to the blocking or locking, the electrically insulating cover cannot be accidentally removed from the connection part together with the protective housing if the user grips the electrically insulating cover instead of the protective housing or if the protective housing becomes wedged with the electrically insulating cover.

As soon as the connected state is released, there is also no active connection between the electrically insulating cover and the protective housing that could pull the electrically insulating cover off the connection part. The blocking or locking of the fastening section by the protective housing therefore increases the reliability of the touch protection for the duration of the connected state. In addition, the electrically insulating cover and the protective housing can fulfil the touch protection function together and ensure the electrical safety of the module connector.

The solution according to this invention can be further improved with the following mutually independent and individually advantageous embodiments and further developments.

For the sake of better readability of the description, only the singular is used for some features, although these features may also be present in the plural. For example, the fastening section of the electrically insulating cover comprises at least one retaining element. The descriptions of the retaining element thus refer to the at least one retaining element as well as to any other retaining elements that may be provided on the electrically insulating cover. Similarly, the connection part comprises at least one recess.

If no recess is provided on the connection part, the electrically insulating cover may also be friction-fitted to the connection part by means of the retaining element. Hence, the electrically insulating cover can be retrofitted to existing connection parts without any recess.

According to a further possible embodiment, the fastening section may be adjacent to the housing section. In particular, the fastening section and the housing section may be connected. This connection may be in one piece, monolithic or a material-bond. Advantageously, the electrically insulating cover is therefore an integral single component. Alternatively, the electrically insulating cover may also be configured in several parts.

According to a further possible embodiment, the retaining element may be configured as a cantilever. That is, the retaining element may be configured to be self-supporting. In particular, the retaining element may comprise a proximal end with which the retaining element is attached to the protective collar. The proximal end thus represents a base of the retaining element. In other words, the proximal end may at least partially form a transition between the housing section and the fastening section. In addition, the retaining element may comprise a distal end that is spaced apart from the housing section, specifically from the protective collar. In this case, the proximal end may be arranged closer to the aforementioned edge region of the contacting chamber and the distal end may be arranged closer to the inner region of the contacting chamber. The self-supporting retaining element saves material costs as no support ribs or similar structures need to be formed. However, support ribs or similar structures may of course be provided if necessary.

According to a further possible embodiment, the retaining element may be configured to be deflectable towards the protective collar. In other words, the retaining element may be configured to be more flexible than the protective collar or the rest of the electrically insulating cover. In particular, the distal end of the retaining element may be moved towards the protective collar by deformation of the retaining element within its elastic deformation range. In doing so, a distance between the distal end and the protective collar may be reduced by at least a quarter, in particular by a third, preferably by half or fully. The deflectable retaining element can be used to create a latching, snap-fit connection between the electrically insulating cover and the connection part.

For example, the retaining element may be configured as a latching arm that engages in the recess of the connection part. In particular, the latching arm may co-operate with a shoulder formed by the recess. That is, the latching arm may form a latching surface or latching edge that creates an undercut for the shoulder. Likewise, the shoulder may create an undercut for the latching arm.

The connection part is an electrically conductive component that is attached to a current conductor and, together with the electrically insulating cover and an electrically insulating cap, forms the touch protected interface of the module connector. Herein, the electrically insulating cap may be arranged at fastening means of the module connector.

The connection part may be arranged at one end or between two ends of the current conductor. The current conductor may be a flat conductor, a conductor rail, a current strip or a cable, for example. The current conductor leads to an electrical module, which is connected via the module connector and its connection part. In particular, the connection part may be pressed, welded and/or screwed into a receiving opening of the associated conductor.

The connection part may be a battery terminal or a pole terminal. For example, the connection part may comprise a contact ring that serves as an electrical current bridge. The contact ring may comprise a cylindrical outer surface and a flat end surface on which a connection part of the mating part, also configured as a contact ring, may be contacted. This contacting can take place within the contacting chamber. This means that the protective collar may at least partially surround the area in which the connection parts of the touch protected interface and the mating part make contact. Accordingly, the contacting chamber is also configured to at least partially receive the connection part of the mating part in addition to the connection part of the touch protected interface.

The recess of the connection part may be configured as a circumferential groove. Accordingly, the connection part, in particular the contact ring, may be a turned metal component or it may be a cold-formed metal component e.g., made by profile rolling. Alternatively, the recess may be realized by a change in the cross-section of the connection part, in particular the contact ring. The shoulder mentioned above is then located directly at the change in cross-section. The connection part with such a change in cross-section may be produced by turning and/or cold forming.

To improve the touch protection function, the protective collar of the housing section may protrude or tower over the connection part when it is mounted. In addition, the protective collar may be closed, continuous and circumferential. For example, the protective collar may be configured in the shape of a sleeve, in particular a cylindrical sleeve. An inner diameter of the protective collar may preferably be greater than or equal to an outer diameter of the protective housing of the mating part of the touch protected interface. When connecting the touch protected interface to the mating part, the protective collar may then also at least partially accommodate the protective housing.

In order to provide space for the protective housing of the mating part in the contacting chamber next to the accommodated connection part of the touch protected interface, the protective collar may be spaced from the connection part by a spacing gap. In particular, the spacing gap between the protective collar and the connection part of the touch protected interface may be configured to at least partially receive the protective housing of the mating part. In this case, the protective housing may first be inserted past an outer edge of the protective collar into the contacting chamber, in particular into the spacing gap.

The recess of the connection part may be located on the cylindrical outer surface of the contact ring. In particular, the recess may be configured as the above-mentioned circumferential groove on the contact ring. Alternatively, the recess of the connection part may also be located on any other outer surface of the connection part that faces in a radial direction. With respect to the plug-in direction, the recess may be located at the same height as the electrically insulating cover or below the electrically insulating cover.

Optionally, the electrically insulating cover may be configured to be fitted on the connection part. During this fitting, the deflectable retaining element, in particular the latching arm, may initially rest against the cylindrical outer surface of the contact ring and be elastically deformed in the process. As soon as the electrically insulating cover is fully fitted, the latching arm and the recess coincide so that the latching arm may engage in the recess of the connection part. The elastic restoring force in particular causes the engagement to produce a clicking sound, which may serve as an acoustic assembly aid.

Regardless of the exact shape of the retaining element, a free space may be formed between the protective collar and the retaining element. When the retaining element is deflected as described above, the distal end of the retaining element moves into this free space. As soon as the retaining element is received in the recess of the connection part, the distal end leaves the free space again. The protective housing may comprise at least one locking lance or a locking collar, which fills the free space when the touch protected interface is connected to the mating part. In this way, the blocking or locking of the fastening section described above is realized.

In order to facilitate handling of the module connector, the electrically insulating cover of the touch protected interface may be configured to pre-lock with the protective housing of the mating part. For this purpose, complementary pre-locking elements may be provided on the electrically insulating cover as well as the protective housing. During the pre-lock, the protective housing and the electrically insulating cover stay together until separated by a pulling force. This allows the user to let go off the pre-locked module connector and instead handle a tool for a screw or other kind of fastening means that bring the touch protected interface and mating part from the pre-lock into an end lock.

By blocking or locking the fastening section through the at least one locking lance or locking collar of the protective housing, it is ensured that the pulling force required to release the pre-lock does not inadvertently pull the electrically insulating cover off the connection part.

According to a further possible embodiment, the retaining element may be located completely inside the contacting chamber. This means that no part of the retaining element protrudes out of the contacting chamber. Consequently, the retaining element is protected against external influences by the protective collar and does not break off during transport and storage, or does so at least less frequently. Also in the mounted condition, the retaining element is less likely to break off compared to retaining elements of known covers that stick out of their protective collar.

In order to have the retaining element extend as far as possible into the contacting chamber without taking up an excessive amount of space, the retaining element may at least sectionally extend parallel to the protective collar. In particular, the arched, bent, curved, arcuate or inclined shape of the retaining element may comprise at least one straight section. The straight section may be adjacent to the aforementioned free space. Along this straight section, a distance between an outer surface of the retaining element and an inner surface of the protective collar may be constant.

According to a further possible embodiment, the aforementioned base of the retaining element may form a support surface that is offset from the protective collar and faces inwards with respect to the contacting chamber. The support surface may be offset from the protective collar in that it is a surface that is recognizably distinct from the protective collar. The support surface may be embodied by a continuous single surface or by several spaced-apart partial surfaces. Furthermore, the support surface may be configured to fit snugly against the connection part. In particular, the support surface may delimit an inner contour that corresponds, at least sectionally, to an outer contour of the connection part. When the electrically insulating cover is placed on the connection part, the inward-facing support surface may nestle against the connection part so that the electrically insulating cover is positioned precisely in relation to the connection part.

In other words, the support surface helps to correctly position or center the connection part within the protective collar. The fastening section may therefore also function at least partially as a positioning section. The retaining element may thus be arranged on the positioning section.

In order to simplify further the fitting of the electrically insulating cover on the connection part, the contacting chamber may extend in the plug-in direction. Since the support surface faces inwards with respect to the contacting chamber, the support surface may provide a sliding surface or guide surface on which the electrically insulating cover can slide relative to the connection part.

As a further positioning aid, the housing section may form a seating surface for a flat conductor of the module connector. The seating surface may be substantially flat and extend perpendicular to the plug-in direction. With this seating surface, the electrically insulating cover may rest flat and stable on the flat conductor when the electrically insulating cover is fitted on the connection part. Furthermore, the retaining element may extend away from the seating surface. In other words, the seating surface may face away or be directed away from the retaining element. Hence, the retaining element together with the seating surface may fix the degree of freedom of the electrically insulating cover along the plug-in direction. For example, the seating surface can prevent the electrically insulating cover from moving in the plug-in direction and the retaining element prevents the electrically insulating cover from moving against the plug-in direction.

The touch protected interface may comprise the current conductor configured as a flat conductor with the aforementioned receiving opening. The connection part of the touch protected interface may be fixed in the receiving opening. Furthermore, the fastening section, in particular the retaining element, may be at least sectionally arranged in the recess between the connection part and the flat conductor. In this way, the connection part and the flat conductor may hold the fastening section jointly.

According to a further possible embodiment, the retaining element may at least sectionally extend at an oblique angle to the seating surface. In this case, an inner or outer surface of the retaining element may be at any angle between 0° and 90° to the seating surface. This allows the retaining element to stem against and resist the above-mentioned pulling force, in particular a pull-off force acting against the plug-in direction.

For reasons of increased stability and redundancy, the electrically insulating cover may comprise at least two retaining elements that are arranged opposite each other with respect to the contacting chamber. In principle, the electrically insulating cover may comprise any even number of retaining elements, which are arranged pairwise opposite each other in relation to the contacting chamber. It is also conceivable that the electrically insulating cover comprises an odd number of retaining elements, which are distributed around the contacting chamber and comprise a regular angular distance between them. The use of three retaining elements in particular allows a stable position to be clearly defined, as with a tripod. Instead of multiple separate retaining elements, the electrically insulating cover may also comprise a single, continuous retaining element that extends along the entire protective collar in the circumferential direction.

In addition to the aforementioned receiving opening, the current conductor may comprise a secondary hole or notch. In this case, the housing section may form a coding pin that extends transversely, in particular perpendicular to the seating surface. Furthermore, the coding pin may protrude from the seating surface and serve to define a predetermined orientation of the electrically insulating cover with respect to the current conductor. The coding pin ensures that the electrically insulating cover with the seating surface may only rest on the current conductor if the electrically insulating cover has the predetermined orientation in which the coding pin coincides with the associated secondary hole or notch. This prevents incorrect installation of the electrically insulating cover.

Additionally or alternatively, incorrect assembly between the touch protected interface and its mating part may be avoided if the protective collar forms at least one coding slot into which a coding rib of the protective housing may be inserted, thus creating a coding effect.

Optionally, the coding slot may extend along the plug-in direction from the aforementioned outer edge of the protective collar to the seating surface. In other words, the coding slot may extend along the plug-in direction over the entire height of the protective collar. This achieves a sufficient coding depth, as the coding rib on the protective housing of the mating part can have the same length as the coding slot. The greater the coding depth, the earlier the coding effect may start and incorrect assembly may be recognized quicker.

The significance of the coding depth shall be illustrated with a counter-example. If the coding slot did not extend from the outer edge of the protective collar up to the seating surface, but only half as far, the coding rib would also have to be shortened accordingly, otherwise it would not fit entirely into the coding slot. In particular, the "front" half of the coding rib facing the touch protected interface would have to be omitted. The coding effect would then only ensue when half of the touch protected interface is already connected to the (possibly incorrect) mating part. Of course, the coding features, i.e. coding slot and coding rib, may also be arranged between the protective collar and the protective housing the other way round.

To ensure that the coding slot can extend along the entire height of the protective collar in the plug-in direction, no retaining element should obstruct the coding slot. In other words, the coding slot should not be aligned with any retaining element in the plug-in direction, but should be offset in the circumferential direction. If several retaining elements are provided, the coding slot should be arranged between two retaining elements in the circumferential direction.

The object defined at the outset is also solved by a kit with an electrically insulating cover according to one of the above embodiments. Furthermore, the kit comprises a first electrically conductive connection part, an identically constructed second connection part, a first flat conductor and a second flat conductor with a different thickness than the first flat conductor. The first connection part is fixed to the first flat conductor and the second connection part is correspondingly fixed to the second flat conductor. Due to the identical design, the electrically insulating cover may be selectively attached to both the first connection part and the second connection part.

Advantageously, neither the thickness nor any other dimension of the two flat conductors has any influence on the attachment of the electrically insulating cover.

The fitting process of the electrically insulating cover onto the connection part may be carried out, after the connection part is joint with the associated conductor e.g. by being pressed, welded, and/or screwed into the receiving opening as described above. In this case, the connection part and its associated conductor may already be available in their joint state as a result of a previous manufacturing step. In particular, if this previous manufacturing step involves heat or mechanical forces, it is expedient to carry out the fitting process of the electrically insulating cover only afterwards in order to keep the electrically insulating cover away from said thermal or mechanical strains.

In an alternative scenario, the assembly sequence may be reversed in that the electrically insulating cover is first fitted onto the connection part. Thereafter the connection part may be joint with the associated conductor e.g. through pressing or screwing. Advantageously, the subsequent pressing or screwing in this assembly sequence can be used to minimize or even completely eliminate play between the electrically insulating cover and the connection part as will be described in the following.

For example, if the electrically insulating cover and the connection part are held together by the above-mentioned form-fitting connection, a certain amount of play in the plug-in direction will inherently exist due to the nature of snap-fit connections. When the electrically insulating cover rests with its seating surface on the associated conductor and the retaining element engages with the recess of the connection part, the electrically insulating cover may be effectively clamped between the connection part and the associated conductor. After all, the retaining element extends away from the seating surface and the connection part is pressed or screwed to the associated conductor along the plug-in direction which is perpendicular to the seating surface. Hence, this will lead to the electrically insulating cover being clamped between the connection part and the associated conductor, all the while eliminating or at least minimizing the above-mentioned play in the plug-in direction.

In the following, exemplary embodiments are described with reference to the figures. In the figures, the same reference numerals are used for elements that correspond to one another in terms of their function and/or structure. As described above, an aspect of an embodiment can be omitted if its technical effects is not needed for a particular application, and vice versa: an aspect that is not part of a specific embodiment may be added if its technical effect is advantageous in a specific application.

In the drawings:
- Fig. 1: shows a schematic representation of an exploded, perspective view of a module connector according to one possible embodiment;
- Fig. 2: shows a schematic representation of an exploded, perspective view of a touch protected interface according to one possible embodiment;
- Fig. 3: shows a schematic representation of an exploded, sectional view of the touch protected interface from Fig. 2 cut along the sectional plane III-III shown in Fig. 2;
- Fig. 4: shows a schematic representation of a perspective, sectional view of an electrically insulating cover according to one possible embodiment cut along the sectional plane III-III shown in Fig. 2;
- Fig. 5: shows a schematic representation of a perspective, sectional view of the electrically insulating cover from Fig. 4 cut along the sectional plane V-V shown in Fig. 2;
- Fig. 6: shows a schematic representation of a sectional side view of the touch protected interface according to another possible embodiment;
- Fig. 7: shows a schematic representation of a sectional side view of the module connector according to another possible embodiment; and
- Fig. 8: shows a schematic representation of a sectional view of a kit according to one possible embodiment.

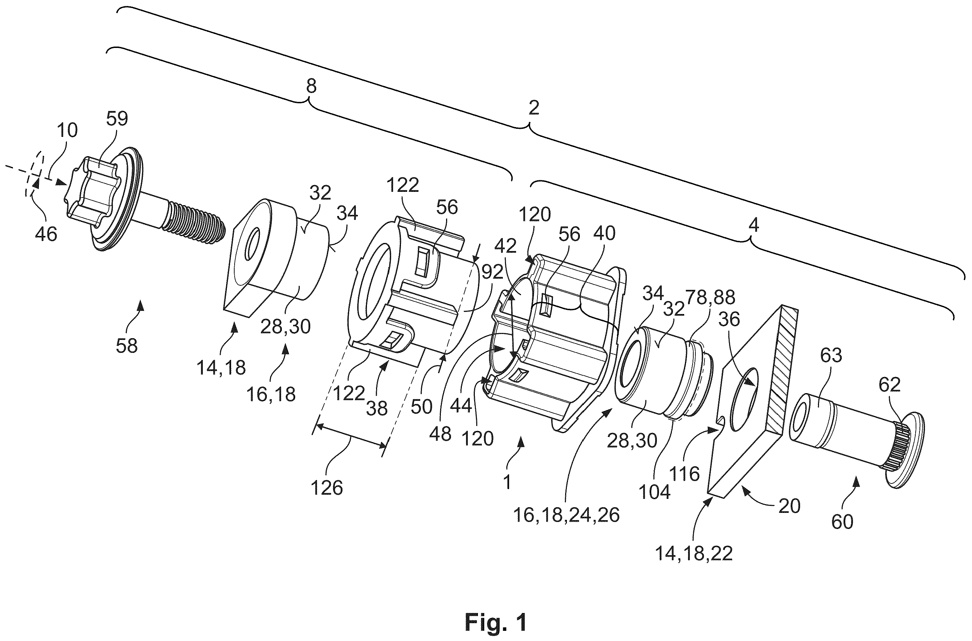

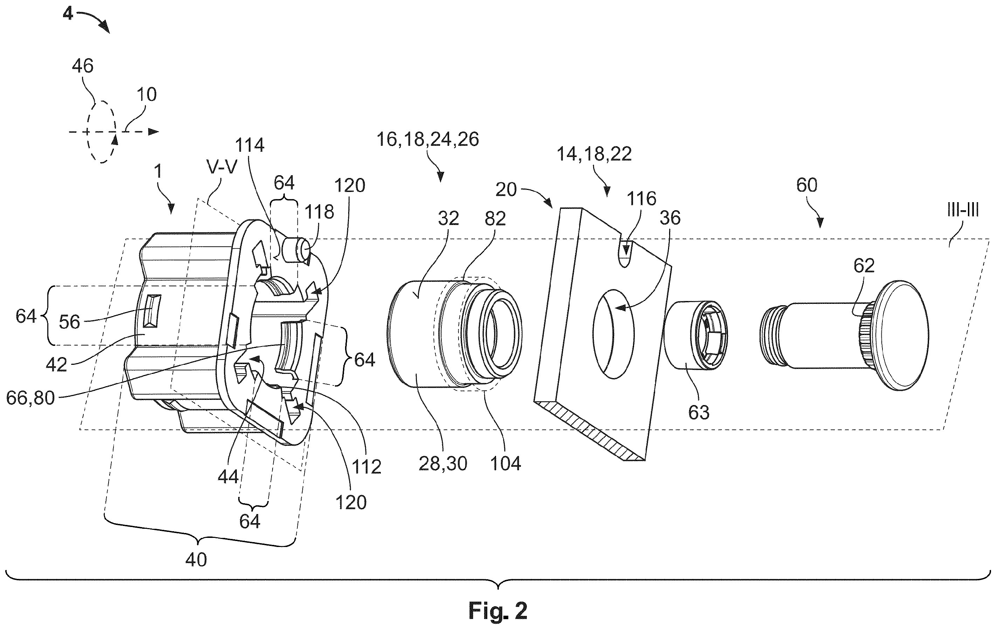

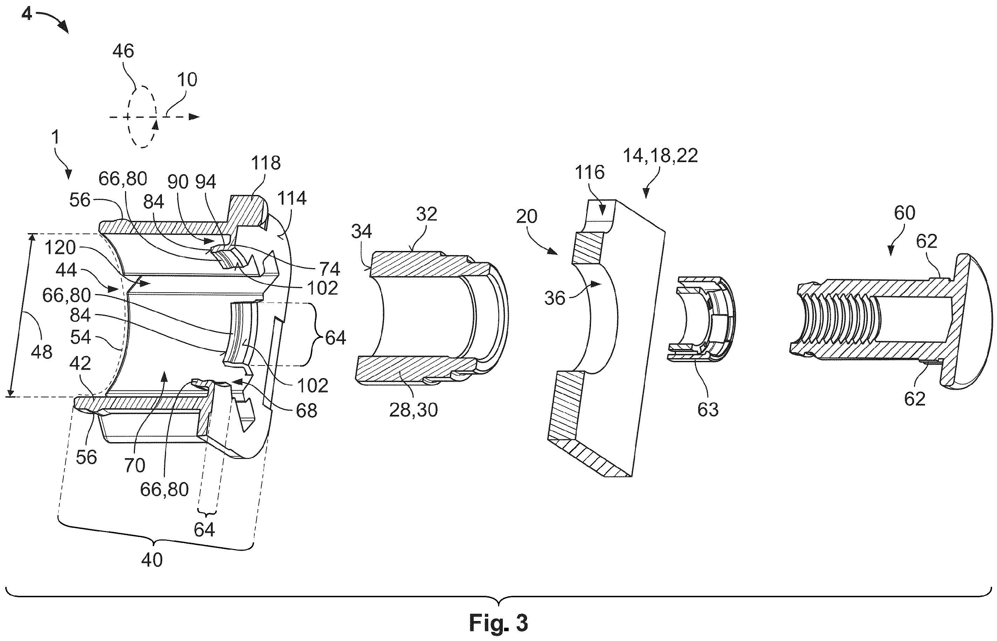

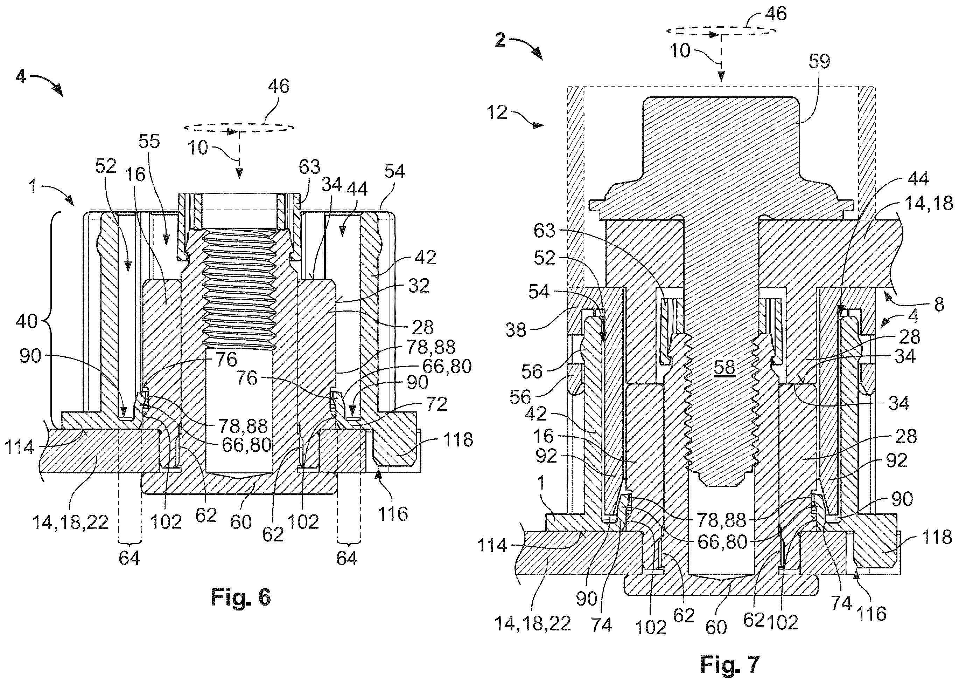

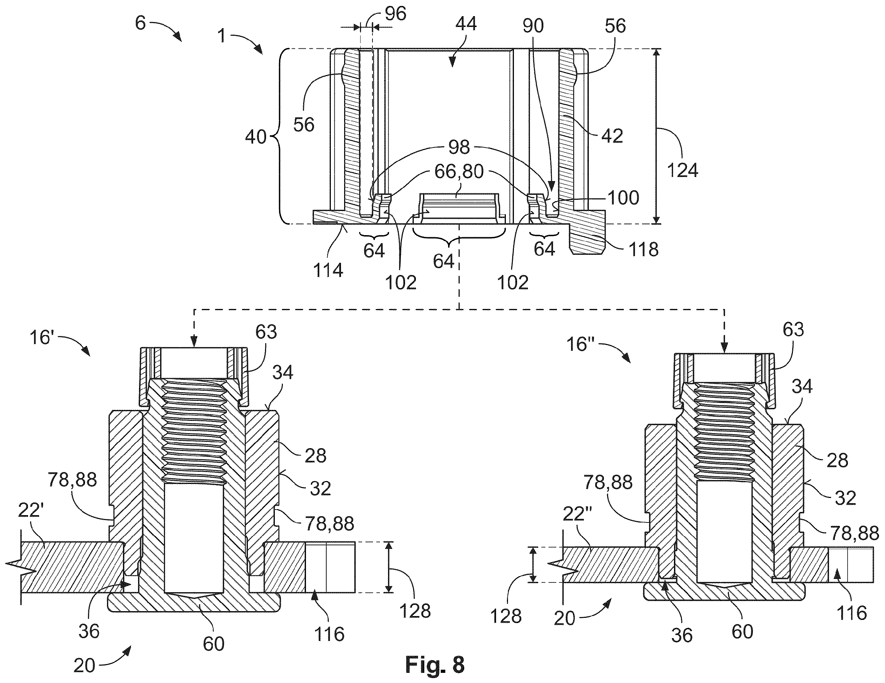

In the following, the structure of an exemplary embodiment of an electrically insulating cover 1 is explained with reference to Figs. 1 to 8. Moreover, the structure on an exemplary embodiment of a module connector 2 is explained with reference to Figs. 1 and 7. Further, Figs. 2, 3 and 6 are used for explaining the structure and function of a touch protected interface 4 according to an exemplary embodiment. Lastly, Fig. 8 is used for explaining the structure of an exemplary embodiment of an assembly kit 6 according to the present invention.

As can be seen in Fig. 1, the electrically insulating cover 1 may be part of the touch protected interface 4, which in turn may be part of the module connector 2. Besides the touch protected interface 4, the module connector 2 comprises a mating part 8 that is complementary to the touch protected interface 4. Herein, the mating part 8 is connectable to the touch protected interface 4 along a plug-in direction 10. That means the mating part 8 and the touch protected interface 4 can be connected to each other along the plug-in direction 10. This constitutes a connected state 12 of the module connector 2, in particular of the touch protected interface 4 and the mating part 8 (see Fig. 7).

In general, the module connector 2 can be used in battery systems and other kinds of systems in the field of energy engineering to interconnect different electrical modules (not shown) such as battery modules, control units, current transformers or busbars. Herein, the modules may be connected to each other using current conductors 14 and connection parts 16. In other words, each current conductor 14 leads to one electrical module and is connected via the module connector 2 and its connection parts 16 to another current conductor 14 that leads to another electrical module.

The connection parts 16 are electrically conductive components 18 that are attached to the respective current conductors 14. In particular, each connection part 16 may be arranged at one end 20 of the corresponding current conductor 14. The current conductors 14 may be configured as flat conductors 22 to which the connection parts 16 are fixed.

The connection parts 16 may be battery terminals 24 or pole terminals 26. In the shown example of Fig. 1, the connection parts 16 each comprise a contact ring 28 that serves as an electrical current bridge 30. The respective contact rings 28 may comprise a cylindrical outer surface 32 and a flat end surface 34 on which the corresponding other connection part 16 may be contacted (see Fig. 7).

The touch protected interface 4 may comprise the flat conductor 22 with a receiving opening 36. The contact ring 28 of the connection part 16 may be press-fit in the receiving opening 36. Alternatively or additionally, the connection part may be welded and/or screwed to the associated current conductor. Conductor rails, current strips and cables may also be used as current conductors.

The electrically insulating cover 1 is provided as part of the touch protected interface 4 to prevent a user, such as a mechanic in a workshop, from accidentally touching the electrically conductive components 18, in particular the connection part 16. For the same reason, the mating part 8 comprises a protective housing 38 that surrounds its connection part 16.

The electrically insulating cover 1 comprises a housing section 40, which forms a protective collar 42 for the connection part 16. In particular, the protective collar 42 of the housing section 40 may protrude or tower over the connection part 16 as is shown in Fig. 6.

Moreover, the electrically insulating cover 1 comprises a contacting chamber 44, which is at least sectionally surrounded by the protective collar 42 and which is configured to receive the connection part 16 of the touch protected interface 4 at least partially therein (see Fig. 6). The contacting chamber 44 may extend in the plug-in direction 10. The connection part 16 received in the contacting chamber 44 is at least sectionally surrounded by the protective collar 42 along a circumferential direction 46, so that it cannot be touched by fingers, hands or other body parts of the user.

It is in this contacting chamber 44 where the contacting between the flat end surfaces 34 of the contact rings 28 takes place. In other words, the protective collar 42 may at least partially surround the area in which the connection parts 16 of the touch protected interface 4 and the mating part 8 make contact. Accordingly, the contacting chamber 44 is also configured to at least partially receive the connection part 16 of the mating part 8 in addition to the connection part 16 of the touch protected interface 4.

As can be seen in Fig. 1, the protective collar 42 may be closed, continuous and circumferential. For example, the protective collar 42 may be configured in the shape of a sleeve, in particular a cylindrical sleeve. An inner diameter 48 of the protective collar 42 may be greater than or equal to an outer diameter 50 of the protective housing 38 of the mating part 8. Hence, the protective collar 42 can at least partially accommodate the protective housing 38, when connecting the mating part 8 to the touch protected interface 4.

In order to provide space for the protective housing 38 in the contacting chamber 44 next to the accommodated connection part 16 of the touch protected interface 4, the protective collar 42 may be spaced from the connection part 16 by a spacing gap 52. In particular, the spacing gap 52 between the protective collar 42 and the connection part 16 of the touch protected interface 4 may be configured to at least partially receive the protective housing 38 of the mating part 8. In this case, the protective housing 38 may first be inserted past an outer edge 54 of the protective collar 42 into the contacting chamber 44, in particular into the spacing gap 52. Herein, the spacing gap 52 may form part of an access slot 55 through which the connection part 16 of the mating part 8 is able to reach the contact ring 28 of the touch protected interface 4. The access slot 55 will be described in further detail below.

In order to facilitate handling of the module connector 2, the electrically insulating cover 1 of the touch protected interface 4 may be configured to pre-lock with the protective housing 38 of the mating part 8. For this purpose, complementary pre-locking elements 56 may be provided on the electrically insulating cover 1 as well as on the protective housing 38. During the pre-lock, the protective housing 38 and the electrically insulating cover 1 stay together until separated by a pulling force.

This allows the user to let go off the pre-locked module connector 2 and instead handle a tool (not shown) for a screw 58 or other kind of fastening means that bring the touch protected interface 4 and mating part 8 into an end lock (see Fig. 7). In particular, the screw 58 may comprise a screw head 59 that is compatible with the tool for handling the screw 58. Moreover, the screw 58 may be fastened to a threaded sleeve 60 in order to press the flat end surfaces 34 of the contact rings 28 against each other. The threaded sleeve 60 may comprise a knurled section 62 that is be press-fit into the contact ring 28 of the touch protected interface 4.

The threaded sleeve 60 may comprise an electrically insulating cap 63, which is arranged oppositely with respect to the knurled section 62. The electrically insulating cap 63 may be a separate component e.g., made of the same material as the electrically insulating cover 1. In particular, the electrically insulating cap 63 may be clipped, latched or snap-fitted onto an end section of the threaded sleeve 60 (see Fig. 1). Together with the protective collar 42 of the electrically insulating cover 1, the electrically insulating cap 63 can specifically restrict the accessibility of the contacting chamber 44, in particular of the contact ring 28 located therein. In other words, the electrically insulating cap 63 may supplement, improve or complete the touch protection functionality provided by the electrically insulating cover 1, resulting in an even higher safety level of the touch protected interface 4.

For example, the contacting chamber 44 and the contact ring 28 can only be accessed via the above-mentioned access slot 55, which extends between the protective collar 42 and the electrically insulating cap 63. As such, the access slot 55 may be annular in shape and may open into or include the spacing gap 52 (see Fig. 6).

Similarly, the screw 58 may also comprise such an electrically insulating cap (not shown) arranged oppositely with respect to the screw head 59.

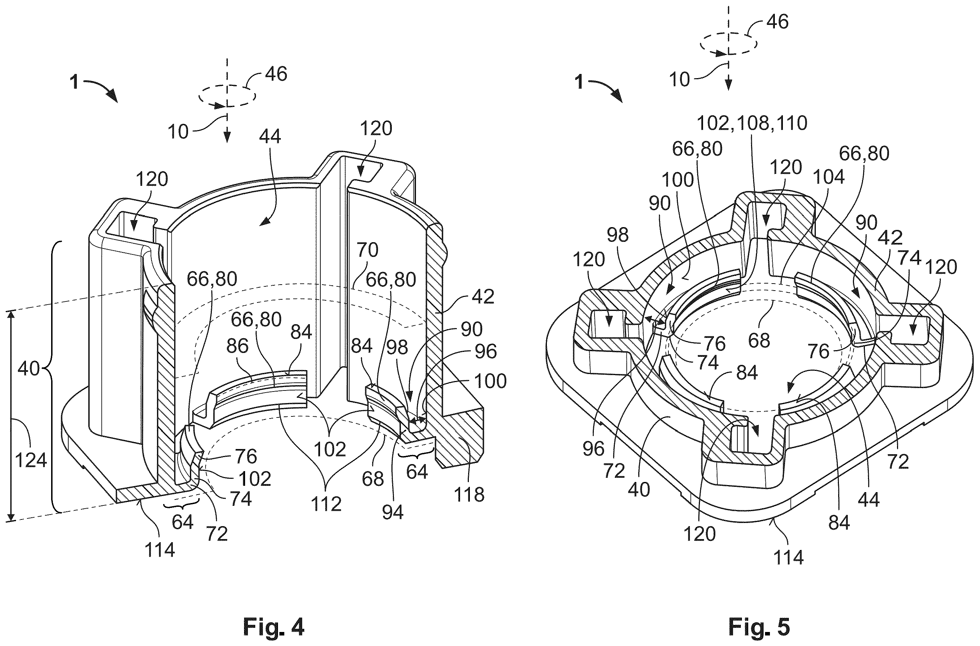

As can be seen in Fig. 4, the electrically insulating cover 1 comprises a fastening section 64. The fastening section 64 may be adjacent to the housing section 40. In particular, the fastening section 64 and the housing section 40 may be connected monolithically.

The fastening section 64 serves for fastening the electrically insulating cover 1 to the connection part 16. As such, the fastening section 64 extends at least partially within the contacting chamber 44 and comprises one or more retaining elements 66 which are arched into the contacting chamber 44. In the shown exemplary embodiments, the fastening section 64 comprises four retaining elements 66 that are arranged pairwise opposite each other with respect to the contacting chamber 44. Alternatively, the electrically insulating cover may comprise an odd number of retaining elements, which are distributed around the contacting chamber and comprise a regular angular distance between them.

The retaining elements 66 are all arched into the contacting chamber 44 in that they extend into the contacting chamber 44 in an arched, bent, curved, arcuate or inclined shape. In particular, the retaining elements 66 may extend from an edge region 68 of the contacting chamber 44 towards an inner region 70 of the contacting chamber 44. In other words, the retaining elements 66 extend away from the protective collar 42 and increasingly deeper into the contacting chamber 44 along their arched, bent, curved, arcuate or inclined shape.

These retaining elements 66 arched into the contacting chamber 44 can directly and immediately form form-fitting and/or force-fitting connections with the connection part 16 located in the contacting chamber 44. In contrast to a conventional touch protection, which is usually attached to the conductor, the electrically insulating cover 1 of the present invention can be used regardless of the dimensions of the current conductor 14. This will be described in further detail below.

As can be seen in Fig. 4, the retaining elements 66 may be configured as self-supporting cantilevers, respectively. In particular, each retaining element 66 may comprise a proximal end 72 with which the retaining element 66 is attached to the protective collar 42. The proximal end 72 thus represents a base 74 of the retaining element 66. In other words, the proximal end 72 may at least partially form a transition between the housing section 40 and the fastening section 64. In addition, each retaining element 66 may comprise a distal end 76 that is spaced apart from the housing section 40, specifically from the protective collar 42. Herein, the proximal end 72 may be arranged closer to the aforementioned edge region 68 of the contacting chamber 44 and the distal end 76 may be arranged closer to the inner region 70 of the contacting chamber 44.

Moreover, each retaining element 66 may be configured to be deflectable towards the protective collar 42. In other words, the retaining elements 66 may be configured to be more flexible than the protective collar 42 and the rest of the electrically insulating cover 1. In particular, the distal end 76 of each retaining element 66 may be moved towards the protective collar 42 by deformation of the retaining element 66 within its elastic deformation range. In doing so, a distance between the distal end 76 and the protective collar 42 may be reduced by at least a quarter, in particular by a third, preferably by half or fully. The deflectable retaining elements 66 can be used to create a latching, snap-fit connection between the electrically insulating cover 1 and the connection part 16.

As can be seen in Fig. 6, the connection part 16 comprises a recess 78 in which the fastening section 64 of the electrically insulating cover 1 is receivable in a form-fitting manner. That is, the fastening section 64 can be received in the recess 78 and result in the above form-fit or snap-fit connection between the electrically insulating cover 1 and the connection part 16. In particular, the retaining element 66 can be positively received in the recess 78. For example, each retaining element 66 may be configured as a latching arm 80 that engages in the recess 78 of the connection part 16. In particular, the latching arm 80 may co-operate with a shoulder 82 formed by the recess 78. Herein, the latching arm 80 may form a latching surface 84 or latching edge 86 that creates an undercut for the shoulder 82. Likewise, the shoulder 82 may create an undercut for the latching arm 80.

The recess 78 of the connection part 16 may be located on the cylindrical outer surface 32 of the contact ring 28. In particular, the recess 78 may be configured as a circumferential groove 88 on the contact ring 28 (see Fig. 1). Accordingly, the connection part 16, in particular the contact ring 28, may be a turned metal component. Alternatively, the recess 78 may be realized by a change in cross-section of the connection part 16, in particular of the contact ring 28. The shoulder 82 mentioned above is then located directly at the change in cross-section (see Fig. 2). The connection part 16, with a change in cross-section, may be produced by turning and/or cold forming.

Optionally, the electrically insulating cover 1 may be configured to be fitted on the connection part 16. When fitting, the deflectable retaining elements 66, in particular the latching arms 80, may initially rest against the cylindrical outer surface 82 of the contact ring 28 and be elastically deformed in the process. As soon as the electrically insulating cover 1 is fully fitted, the latching arms 80 and the recess 78 coincide so that the latching arms 80 may engage in the recess 78 of the connection part 16. If no recess is provided on the connection part, the electrically insulating cover may still be friction-fitted to the connection part by means of the deflectable retaining elements.

As can be seen in Fig. 4, a free space 90 may be formed between the protective collar 42 and each retaining element 66. When the respective retaining element 66 is deflected, as described above, the distal end 76 of the retaining element 66 moves into this free space 90. As soon as the retaining element 66 is received in the recess 78 of the connection part 16, the distal end 76 leaves the free space 90 again. The protective housing 38 may comprise a locking collar 92, which fills the free space 90 when the touch protected interface 4 is connected to the mating part 8 (see Fig. 7).

In this way, the protective housing 38 secures the fastening section 64 of the electrically insulating cover 1 when the touch protected interface 4 is connected to the mating part 8. In other words, the protective housing 38 blocks or locks the retaining elements 66 as long as the touch protected interface 4 and its mating part 8 are in the connected state 12. This prevents unintentional removal of the electrically insulating cover 1. For example, due to the blocking or locking, the electrically insulating cover 1 cannot be accidentally removed from the connection part 16 together with the protective housing 38 if the user grips the electrically insulating cover 1 instead of the protective housing 38 or if the protective housing 38 becomes wedged with the electrically insulating cover 1. By blocking or locking the retaining elements 66 through the locking collar 92 of the protective housing 38, it is further ensured that the above-mentioned pulling force required to release the pre-lock does not inadvertently pull the electrically insulating cover 1 off of the connection part 16.

As can be seen in Fig. 4, the retaining elements 66 may all be located completely inside the contacting chamber 44. This means that no parts of the retaining elements 66 protrude out of the contacting chamber 44. Consequently, the retaining elements 66 are protected against external influences by the protective collar 42.

In order to have the retaining elements 66 extend as far as possible into the contacting chamber 44 without taking up an excessive amount of space, the retaining elements may at least sectionally extend parallel to the protective collar 42. In particular, each retaining element 66 may comprise at least one straight section 94 within its arched, bent, curved, arcuate or inclined shape. The straight section 94 may be adjacent to the aforementioned free space 90. Along this straight section 94, a distance 96 between an outer surface 98 of the retaining element 66 and an inner surface 100 of the protective collar 42 may be constant.

As can further be seen in Fig. 4, the aforementioned base 74 of each retaining element 66 may form a support surface 102 that is offset from the protective collar 42 and faces inwards with respect to the contacting chamber 44. The support surface 102 may be configured to fit snugly against the connection part 16. In particular, the support surface 102 may delimit an inner contour 104 that corresponds at least sectionally to an outer contour 106 of the connection part 16. When the electrically insulating cover 1 is fitted on the connection part 16, the inward-facing support surface 102 may nestle against the connection part 16 so that the electrically insulating cover 1 is positioned precisely in relation to the connection part 16.

Since each support surface 102 faces inwards with respect to the contacting chamber 44, a sliding surface 108 or guide surface 110 is created on which the electrically insulating cover 1 can slide relative to the connection part 16. Moreover, the base 74 of each retaining element 66 may form a lead-in chamfer 112 adjacent to the support surface 102. This also facilitates fitting of the electrically insulating cover 1 on the connection part 16.

As a further positioning aid, the housing section 40 may form a seating surface 114 for the flat conductor 22 of the touch protected interface 4. With this seating surface 114, the electrically insulating cover 1 may rest flat and stable on the flat conductor 22 when the electrically insulating cover 1 is fitted on the connection part 16. Furthermore, the retaining elements 66 may extend away from the seating surface 114. In other words, the seating surface 114 may face away or be directed away from the retaining elements 66. Hence, the retaining elements 66 together with the seating surface 114 can fix the degree of freedom of the electrically insulating cover 1 along the plug-in direction 10. For example, the seating surface 114 can prevent the electrically insulating cover 1 from moving in the plug-in direction 10, while the retaining elements 66 prevent the electrically insulating cover 1 from moving against the plug-in direction 10.

As can also be seen in Fig. 4, the retaining elements 66 may at least sectionally extend at an oblique angle to the seating surface 114. In this case, the inner or outer surface 98 of each retaining element 66 may be at any angle between 0° and 90° to the seating surface 114. This allows the retaining elements 66 to stem against and resist the pulling force, in particular a pull-off force acting against the plug-in direction 10.

In addition to the aforementioned receiving opening 36, the current conductor 14 may comprise a secondary hole or notch 116. In this case, the housing section 40 may form a coding pin 118 that extends transversely, in particular perpendicular to the seating surface 114. Furthermore, the coding pin 118 may protrude from the seating surface 114 and serve to define a predetermined orientation of the electrically insulating cover 1 with respect to the current conductor 14. The coding pin 118 ensures that the electrically insulating cover 1 with the seating surface 114 may only rest on the current conductor 14 if the electrically insulating cover 1 has the predetermined orientation in which the coding pin 118 coincides with the notch 116. This prevents incorrect installation of the electrically insulating cover 1.

Incorrect assembly between the touch protected interface 4 and its mating part 8 may be avoided if the protective collar 42 forms coding slots 120 into which respective coding ribs 122 of the protective housing 38 may be inserted. Optionally, the coding slots 120 may each extend along the plug-in direction 10 from the aforementioned outer edge 54 of the protective collar 42 to the seating surface 114. In other words, the coding slots 120 may all extend along the plug-in direction 10 over the entire height 124 of the protective collar 42. This achieves a sufficient coding depth, as the coding ribs 122 on the protective housing 38 of the mating part 8 can have the same length 126 as the coding slots 120. The greater the coding depth, the earlier incorrect assembly can be recognized.

To ensure that the coding slots 120 can extend along the entire height 124 of the protective collar 42 in the plug-in direction 10, no retaining element 66 should obstruct the coding slots 120. In other words, the coding slots 120 should not be aligned with any retaining element 66 in the plug-in direction 10, but should be offset in the circumferential direction 46 (see Fig. 4).

Fig. 8 shows a kit 6 with the electrically insulating cover 1. Furthermore, the kit 6 comprises a first electrically conductive connection part 16', an identically constructed second connection part 16", a first flat conductor 22' and a second flat conductor 22' with a different thickness 128 than the first flat conductor 22'. The first connection part 16' is fixed to the first flat conductor 22' and the second connection part 16" is correspondingly fixed to the second flat conductor 22". Due to the identical design of the connections parts 16', 16", the electrically insulating cover 1 may be attached selectively to both the first connection part 16' and the second connection part 16". Advantageously, neither the thickness nor any other dimension of the two flat conductors 22', 22" has any influence on the attachment of the electrically insulating cover 1. Therefore, the electrically insulating cover 1 of the present invention can be used regardless of the dimensions of the conductors as already mentioned above.

### Reference Signs

- 1: electrically insulating cover
- 2: module connector
- 4: touch protected interface
- 6: kit
- 8: mating part
- 10: plug-in direction
- 12: connected state
- 14: current conductor
- 16: connection part
- 18: conductive component
- 20: end
- 22: flat conductor
- 24: battery terminal
- 26: pole terminal
- 28: contact ring
- 30: electrical current bridge
- 32: cylindrical outer surface
- 34: flat end surface
- 36: receiving opening
- 38: protective housing
- 40: housing section
- 42: protective collar
- 44: contacting chamber
- 46: circumferential direction
- 48: inner diameter
- 50: outer diameter
- 52: spacing gap
- 54: outer edge
- 55: access slot
- 56: pre-locking element
- 58: screw
- 59: screw head
- 60: threaded sleeve
- 62: knurled section
- 63: electrically insulating cap
- 64: fastening section
- 66: retaining element
- 68: edge region
- 70: inner region
- 72: proximal end
- 74: base
- 76: distal end
- 78: recess
- 80: latching arm
- 82: shoulder
- 84: latching surface
- 86: latching edge
- 88: circumferential groove
- 90: free space
- 92: locking collar
- 94: straight section
- 96: distance
- 98: outer surface
- 100: inner surface
- 102: support surface
- 104: inner contour
- 106: outer contour
- 108: sliding surface
- 110: guide surface
- 112: lead-in chamfer
- 114: seating surface
- 116: notch
- 118: coding pin
- 120: coding slot
- 122: coding rib
- 124: height
- 126: length
- 128: thickness

## Claims

1. Electrically insulating cover (1) for a connection part (16) of an electrical module connector (2), the electrically insulating cover (1) comprising
- a housing section (40) that forms a protective collar (42) for the connection part (16),
- a contacting chamber (44) at least sectionally surrounded by the protective collar (42), the contacting chamber (44) being configured to at least partially accommodate the connection part (16), and
- a fastening section (64) for fastening the electrically insulating cover (1) to the connection part (16),
wherein the fastening section (64) extends at least partially within the contacting chamber (44), and wherein the fastening section (64) comprises at least one retaining element (66) which is arched into the contacting chamber (44).

2. Electrically insulating cover (1) according to claim 1, wherein the at least one retaining element (66) is configured as a cantilever.

3. Electrically insulating cover (1) according to claim 1 or 2, wherein the at least one retaining element (66) is configured to be deflectable towards the protective collar (42).

4. Electrically insulating cover (1) according to any one of claims 1 to 3, wherein the at least one retaining element (66) is located completely within the contacting chamber (44).

5. Electrically insulating cover (1) according to any one of claims 1 to 4, wherein the at least one retaining element (66) at least sectionally extends parallel to the protective collar (42).

6. Electrically insulating cover (1) according to any one of claims 1 to 5, wherein the at least one retaining element (66) comprises a base (74) that is connected to the protective collar (42), wherein the base (74) comprises a support surface (102) which is offset from the protective collar (42) and faces inwards with respect to the contacting chamber (44).

7. Electrically insulating cover (1) according to any one of claims 1 to 6, wherein the housing section (40) forms a seating surface (114) for a flat conductor (22) of the module connector (2) and wherein the at least one retaining element (66) extends away from the seating surface (114).

8. Electrically insulating cover (1) according to claim 7, wherein the at least one retaining element (66) at least sectionally extends at an oblique angle to the seating surface (114).

9. Electrically insulating cover (1) according to claim 7 or 8, wherein the protective collar (42) forms at least one coding slot (120) which extends to the seating surface (114).

10. Electrically insulating cover (1) according to any one of claims 1 to 9, wherein the electrically insulating cover (1) comprises at least two retaining elements (66) which are arranged opposite one another with respect to the contacting chamber (44).

11. Electrically insulating cover (1) according to claim 9 in combination with claim 10, wherein the protective collar (42) surrounds the contacting chamber (44) along a circumferential direction (46), and wherein the at least one coding slot (120) is arranged in the circumferential direction (46) between the at least two retaining elements (66).

12. Touch protected interface (4) for a module connector (2) with an electrically insulating cover (1) according to any one of claims 1 to 11 and an electrically conductive connection part (16) of the module connector (2), wherein the connection part (16) comprises at least one recess (78) in which the fastening section (64) of the electrically insulating cover (1) is receivable in a form-fitting manner.

13. Touch protected interface (4) according to claim 12, wherein the touch protected interface (4) comprises a flat conductor (22) to which the connection part (16) is fixed, wherein the fastening section (64) in the recess (78) is arranged at least sectionally between the connection part (16) and the flat conductor (22).

14. Module connector (2) with a touch protected interface (4) according to claim 12 or 13 and a complementary mating part (8) which is connectable to the touch protected interface (4) along a plug-in direction (10), wherein the mating part (8) comprises a protective housing (38), and wherein the protective housing (38) secures the fastening section (64) of the electrically insulating cover (1) in the connected state (12) of the touch protected interface (4) with the mating part (8).

15. Kit (6) comprising an electrically insulating cover (1) according to any one of claims 1 to 11, a first electrically conductive connection part (16'), an identically constructed second connection part (16"), a first flat conductor (22') and a second flat conductor (22") with a different thickness (128) than the first flat conductor (22'), wherein the first connection part (16') is fixed to the first flat conductor (22'), wherein the second connection part (16") is fixed to the second flat conductor (22"), and wherein the electrically insulating cover (1) is selectively fastenable to the first connection part (16') as well as to the second connection part (16").
